# EUROPEAN PATENT APPLICATION

(11) **EP 4 560 517 A1**
(43) Date of publication of application: **28.05.2025**
(21) Application number: 24208076.0
(22) Date of filing: 22.10.2024
(51) Int. Cl.: G06F 30/17, G06F 30/23, G06F 119/18, G06F 119/08

(54) **METHOD FOR OPTIMIZING A MANUFACTURING PROCESS**

(30) Priority: 22.11.2023 GB 202317824
(71) Applicant: Rolls-Royce plc, London N1 9FX (GB)
(72) Inventor: Bray, Simon E, Derby, DE24 8BJ (GB); Saunders, Benjamin C, Derby, DE24 8BJ (GB)
(74) Representative: Rolls-Royce plc

(57) **Abstract**

A method (100) for optimizing a manufacturing process includes arranging a finite element method (FEM) simulation model (206), a microstructure model (208), and a material model (210) in a closed loop. The method (100) includes performing an iterative simulation process (200) to determine a simulated output (220) of the manufacturing process. The iterative simulation process (200) includes performing a plurality of iterations (212). Each of the plurality of iterations (212) includes the steps of: determining, by the FEM simulation model (206), a plurality of thermomechanical parameters (214) based on a plurality of process parameters (204) and a plurality of previous predicted material properties (218P); determining, by the microstructure model (208), a predicted change in a microstructure (216) based on the plurality of thermomechanical parameters (214); and determining, by the material model (210), a plurality of current predicted material properties (218C) based on the predicted change in the microstructure (216).

## Description

### FIELD

The present invention relates to a method for optimizing a manufacturing process, a computing device, and a non-transitory computer-readable storage medium.

### BACKGROUND

A thermo-mechanical history (e.g., a rate of heating) applied to some materials may strongly influence an evolution of instantaneous microstructure and in-turn dynamic evolution of thermo-mechanical properties of such materials. Thus, it may also influence how it behaves and deforms during a manufacturing process. Therefore, it may be important to include in process model simulations that the thermo-mechanical properties result from non-equilibrium in the microstructures during the manufacturing process, in particular where conditions are extreme and concentrated.

Current process model simulations, such as finite element (FE) simulations of the manufacturing process are limited to the use of a single tabular `look-up' database of a material's equilibrium temperature-dependent thermo-mechanical properties (e.g., flow stress), with no dependency on the thermo-mechanical history. However, in some manufacturing processes, the thermo-mechanical history and deformation may be strongly linked to a part geometry and process variables. Therefore, the current process model simulations may be limited in applicability, and may be unable to account for the non-equilibrium effects in the single tabular `look-up' database. Further, such current process model simulations may be reliant upon trial-and-error experimentation, leading to a high cost, significant requirements for physical material and hardware, scrap (e.g., due to incorrect test or assumption), and may further lead to extended development lead-time.

### SUMMARY

In a first aspect, a method for optimizing a manufacturing process is provided. The method includes arranging a finite element method (FEM) simulation model, a microstructure model, and a material model in a closed loop. The method further includes performing an iterative simulation process to determine a simulated output of the manufacturing process. The iterative simulation process includes performing a plurality of iterations. The plurality of iterations has a first iteration and a last iteration. Each of the plurality of iterations includes the step of determining, by the FEM simulation model, a plurality of thermomechanical parameters of a component undergoing the manufacturing process based on a plurality of process parameters of the manufacturing process and a plurality of previous predicted material properties of the component. Each of the plurality of iterations further includes the step of determining, by the microstructure model, a predicted change in a microstructure of the component based on the plurality of thermomechanical parameters determined by the FEM simulation model. Furthermore, each of the plurality of iterations includes the step of determining, by the material model, a plurality of current predicted material properties of the component based on the predicted change in the microstructure of the component determined by the microstructure model. Furthermore, the method includes determining a quality of the plurality of the process parameters based on the simulated output.

The method of the present disclosure may determine the thermomechanical parameters and predict the material properties during the manufacturing process from a current, local microstructure state. Therefore, the method may conduct improved finite element (FE) computational simulations of the manufacturing process and apply the same in manufacturing of the component. Specifically, the method may link the material model, which is dependent upon the microstructure model, with the FEM simulation model. The closed loop of the method takes into account time-dependent history (e.g., a rate of heating) of the microstructure of the component.

The method of the present disclosure may therefore address the problem of efficiently manufacturing the component to minimize rejection and scrappage. Specifically, the method may provide right first-time process parameters (e.g., experimental parameter settings), which may lead to less trial-and-error, scrap avoidance, and shorter development lead-time. This may also result in a reduction in experimental cost by about 50-75%. The method may be quicker and lower in cost for identification of the process parameters (i.e., key process variables) and relative sensitivities than current methods. Furthermore, the method may enable testing of 'what if' scenarios, (e.g., a change or modification in the microstructure of the component provided to the manufacturing process) and facilitate determining an error quantification.

In some embodiments, the simulated output includes at least a plurality of final thermomechanical parameters of the component determined in a last iteration from the plurality of iterations of the iterative simulation process.

The primary objective of the iterative simulation process may be to predict accurate thermomechanical parameters and/or predict accurate material properties. Using the FEM simulation model, the microstructure model, and the material model in the closed loop may provide the simulated output more precisely.

In some embodiments, in each iteration except the first iteration, the plurality of previous predicted material properties of the component is determined by the material model in a previous iteration from the plurality of iterations. In some embodiments, each iteration further includes providing the plurality of current predicted material properties as the plurality of previous predicted material properties to the FEM simulation model in a next iteration from the plurality of iterations.

Therefore, interim microstructure states are predicted at each time step to inform the FEM simulation model of the manufacturing process such that the FEM simulation model of the manufacturing process is sensitive to the change in the microstructure of the component and the current predicted material properties of the component.

In some embodiments, the plurality of previous predicted material properties includes at least a predicted flow stress of the component.

The predicted flow stress of the component may help to predict how the component may behave and deform during the manufacturing process.

In some embodiments, the plurality of thermomechanical parameters includes a temperature and a stress of the component.

The change in the microstructure may be dependent on the temperature and the stress.

In some embodiments, the microstructure includes a gamma-prime microstructure of the component.

The gamma-prime microstructure may include precipitates which dissolve dynamically (e.g., over time and dependent on instantaneous thermomechanical parameters, such as the temperature and the stress), leading to a rate of softening dependent on a rate they are exposed to the thermomechanical parameters. Further, the current predicted material properties (e.g., the plasticity and the flow stress) of the component may be based on, amongst other things, a dislocation motion which interacts with the precipitates. Therefore, the method of the present disclosure may take into account the instantaneous or current predicted change in the gamma-prime microstructure.

In some embodiments, the component includes at least one of a nickel alloy, an aluminium alloy, and a titanium alloy.

In such materials, the thermomechanical parameters may influence the changes in the microstructure of the component and, in turn, the material properties of the component during the manufacturing process. Further, the changes in the microstructure of the component and the material properties of the component during the manufacturing process may be key to a performance and a capability of the manufacturing process.

In some embodiments, the manufacturing process is at least one of a welding process, a forging process, and a cutting process.

In such manufacturing processes, the thermomechanical parameters may result in non-equilibrium in microstructures and further in the material properties during the manufacturing process.

In some embodiments, the welding process is an inertia friction welding process. The inertia friction welding process is a solid-state welding process that uses inertia forces to join two parts or pieces. In the inertia friction welding process, the thermomechanical parameters may be extreme and concentrated (e.g., where steep thermal gradients are created).

In some embodiments, the plurality of process parameters includes at least one of a flywheel energy, a flywheel rotational speed, and a forging pressure.

In the inertia friction welding process, a rate of heating and deformation may be strongly linked to a part geometry (e.g., butt or tapered contact interface of the component) and the process parameters such as, the flywheel rotational speed, the flywheel energy, and the forging pressure.

In some embodiments, the plurality of iterations is performed for a plurality of time steps. The method predicts the change in the microstructure and the current material properties at each time step and provides the simulated output after the plurality of time steps.

In some embodiments, the method further includes terminating the iterative simulation process after a predetermined time duration. Therefore, the iterative simulation process may be performed numerous times to provide the simulated output before terminating.

In some embodiments, the method further includes, prior to performing the iterative simulation process, receiving the plurality of process parameters and a plurality of initial material properties of the component. Further, the method includes determining, by the FEM simulation model, a plurality of initial thermomechanical parameters to initiate the iterative simulation process. In some embodiments, the plurality of initial material properties is provided as the plurality of previous predicted material properties of the component to the FEM simulation model in the first iteration.

Therefore, upon receiving the plurality of process parameters of the manufacturing process and the plurality of initial material properties of the component, in the first iteration, the FEM simulation model may determine the plurality of initial thermomechanical parameters to initiate the iterative simulation process.

In some embodiments, the quality of the plurality of process parameters includes at least a good quality or a bad quality. The method of the present disclosure may therefore enable a user to predict if a result (e.g., based on the simulated output) of the manufacturing process would be suitable or not for an actual manufacturing process.

In some embodiments, the method further includes applying the process parameters to manufacture the component if the quality of the plurality of process parameters is the good quality. Therefore, the method may provide right first-time process parameters, which may lead to less trial-and-error, scrap avoidance, and shorter development lead-time.

In a second aspect, there is provided a computing device including a processor and a memory having stored therein a plurality of instructions that when executed by the processor causes the computing device to perform the method of the first aspect.

In a third aspect, there is provided a non-transitory computer-readable storage medium having instructions that, when executed, cause at least one processor to perform the method of the first aspect.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

The details of one or more examples of the disclosure are set forth in the accompanying drawings and the description below. Other features, objects, and advantages of the disclosure will be apparent from the description and drawings, and from the claims.

### BRIEF DESCRIPTION OF THE DRAWINGS

Embodiments will now be described by way of example only, with reference to the figures, in which:
**FIG. 1** shows a flowchart of a method for optimizing a manufacturing process, according to an embodiment of the present disclosure;
**FIGS. 2A, 2B** **and** **2C** show schematic block diagrams of an iterative simulation process of the method shown in FIG. 1;
**FIG. 3** shows a schematic block diagram of a computing device; and
**FIG. 4** shows a schematic view of a simulated output of the iterative simulation process.

The following table lists the reference numerals used in the drawings with the features to which they refer:

| Ref no. | Feature | FIG. |
|---|---|---|
| 10 | Computing Device | 3 |
| 12 | Processor | 3 |
| 14 | Memory | 3 |
| 15 | Instructions | 3 |
| 100 | Method | 1 |
| 102 | Step | 1 |
| 104 | Step | 1 |
| 106 | Step | 1 |
| 108 | Step | 1 |
| 110 | Step | 1 |
| 112 | Step | 1 |
| 200 | Iterative Simulation Process | 2A 2B 2C |
| 202 | Block | 2A |
| 204 | Process Parameters | 2A |
| 205 | Initial Material Properties | 2A |
| 206 | Finite Element Method (FEM) Simulation Model | 2A 2B 2C |
| 208 | Microstructure Model | 2A 2B 2C |
| 210 | Material Model | 2A 2B 2C |
| 212 | Plurality of Iterations | 1 2A 2B 2C |
| 212F | First Iteration | 2A |
| 212L | Last Iteration | 2C |
| 214 | Thermomechanical Parameters | 2A 2B 2C |
| 214L | Final Thermomechanical Parameters | 2C 4 |
| 215 | Initial Thermomechanical Parameters | 2A |
| 216 | Microstructure | 2A 2B 2C |
| 216C | Predicted Change in Microstructure | 2A 2B |
| 216L | Final Predicted Change | 2C 4 |
| 218C | Current Predicted Material Properties | 2A 2B 2C |
| 218L | Final Predicted Material Properties | 2C 4 |
| 218P | Previous Predicted Material Properties | 2A 2B |
| 220 | Simulated Output | 2C 4 |
| A | Location | 4 |
| B | Location | 4 |
| C | Component | 4 |
| FS | Final Flow Stress | 4 |
| MA | Final Predicted Microstructure | 4 |
| MB | Final Predicted Microstructure | 4 |
| MPA | Material Properties | 4 |
| MPB | Material Properties | 4 |
| T | Final Temperature | 4 |
| γ' | Gamma-prime Microstructure | 4 |

### DETAILED DESCRIPTION

Aspects and embodiments of the present disclosure will now be discussed with reference to the accompanying figures. Further aspects and embodiments will be apparent to those skilled in the art.

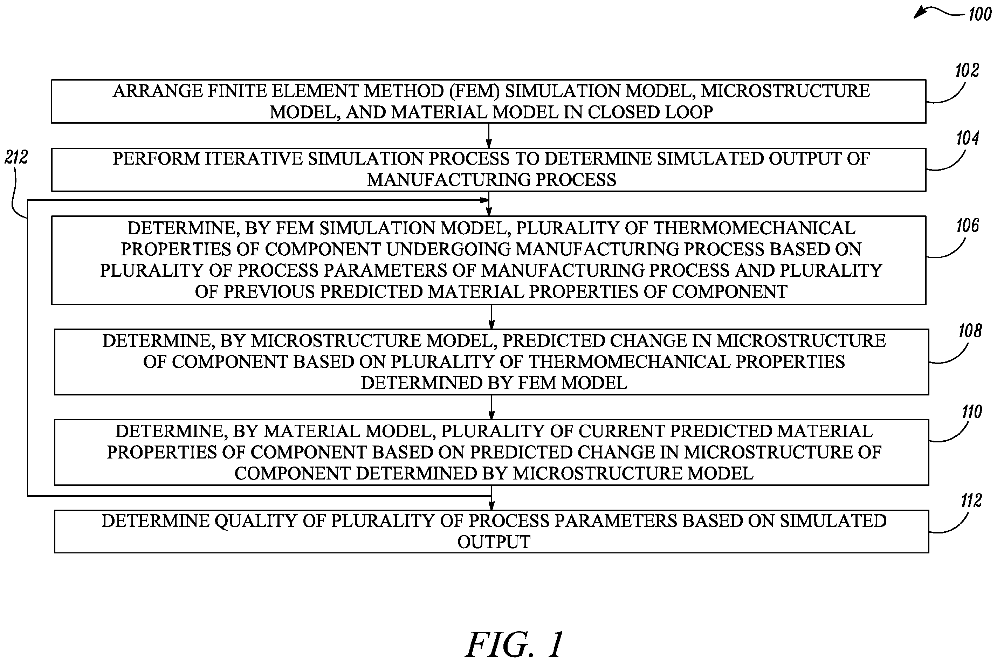

**FIG. 1** shows a flowchart of a method 100 for optimizing a manufacturing process, according to an embodiment of the present disclosure.

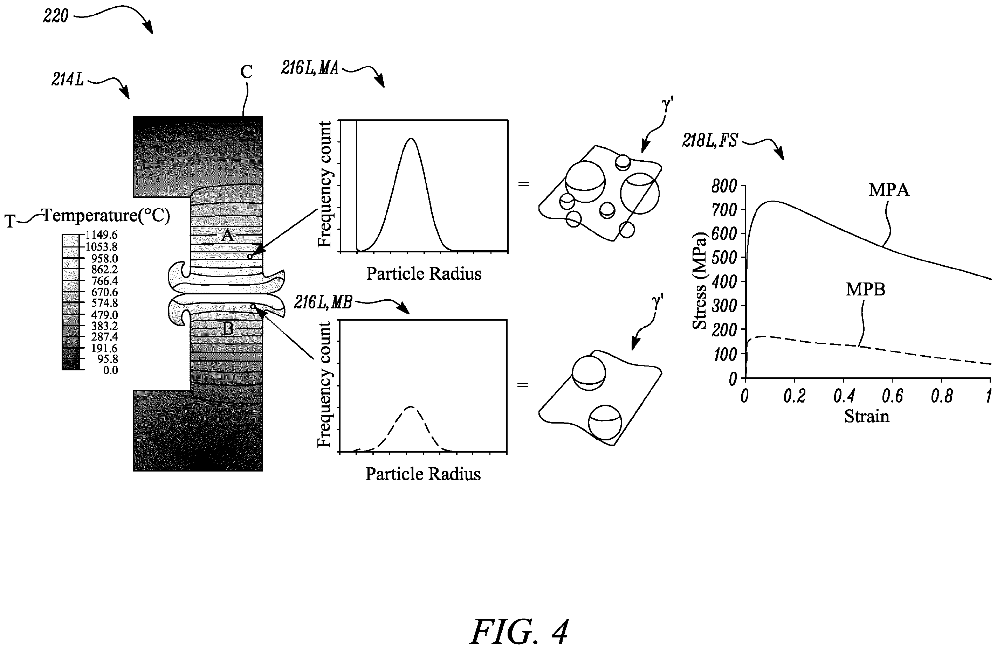

In some embodiments, the manufacturing process is at least one of a welding process, a forging process, and a cutting process. In some embodiments, the welding process is an inertia friction welding process. The manufacturing process may be used to manufacture a component C (shown in FIG. 4). In some embodiments, the component C is manufactured according to the method 100.

In some embodiments, the component C includes at least one of a nickel alloy, an aluminium alloy, and a titanium alloy. In some embodiments, the component C is for a gas turbine engine (not shown). In some embodiments, the component C is a highpressure compressor drum of the gas turbine engine. However, in some other embodiments, the component C may include any component of the gas turbine engine.

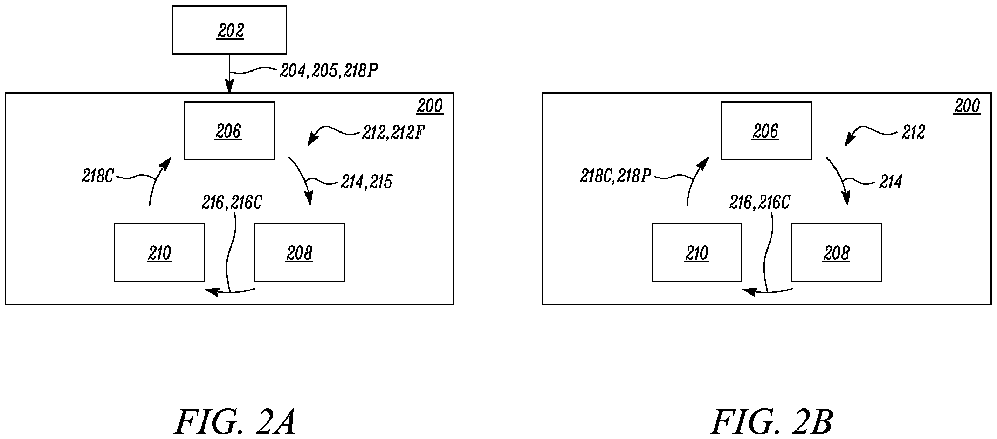

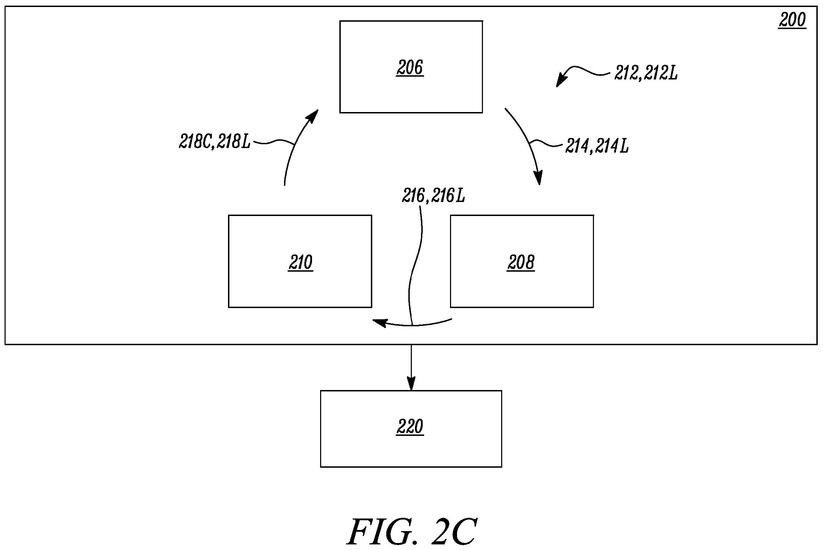

FIGS. 2A, 2B and 2C show schematic block diagrams of the method 100 shown in FIG. 1, according to an embodiment of the present disclosure. Specifically, **FIG. 2A** shows a schematic block diagram of a first iteration 212F of an iterative simulation process 200 of the method 100, **FIG. 2B** shows a schematic block diagram of the iterative simulation process 200 after the first iteration 212F (shown in FIG. 2A) except a last iteration 212L (shown in FIG. 2C), and **FIG. 2C** shows a schematic block diagram of the last iteration 212L of the iterative simulation process 200.

Referring to FIG. 1, FIG. 2A, FIG. 2B and FIG. 2C, at step 102, the method 100 includes arranging a finite element method (FEM) simulation model 206, a microstructure model 208, and a material model 210 in a closed loop.

At step 104, the method 100 includes performing the iterative simulation process 200 to determine a simulated output 220 (shown in FIG. 2C and FIG. 4) of the manufacturing process.

The iterative simulation process 200 includes performing a plurality of iterations 212. The plurality of iterations 212 includes the first iteration 212F (shown in FIG. 2A) and the last iteration 212L (shown in FIG. 2C).

In some embodiments, the method 100 further includes, prior to performing the iterative simulation process 200, receiving a plurality of process parameters 204 and a plurality of initial material properties 205 of the component C.

In some embodiments, the plurality of process parameters 204 includes at least one of a flywheel energy, a flywheel rotational speed, and a forging pressure. Specifically, as discussed above, in some embodiments, the welding process is the inertia friction welding process. In such embodiments, the plurality of process parameters 204 includes at least one of the flywheel energy, the flywheel rotational speed, and the forging pressure which may be strongly linked to a rate of heating and deformation of the component C during the manufacturing process.

In some embodiments, the plurality of initial material properties 205 includes at least an initial flow stress of the component C. A flow stress may determine how the component C behaves and deforms during the manufacturing process.

Specifically, at block 202, the plurality of process parameters 204 of the manufacturing process and the plurality of initial material properties 205 of component C are provided as inputs for the iterative simulation process 200.

In some embodiments, the method 100 further includes, prior to performing the iterative simulation process 200, determining, by the FEM simulation model 206, a plurality of initial thermomechanical parameters 215 to initiate the iterative simulation process 200. In some embodiments, the plurality of initial material properties 205 is provided as a plurality of previous predicted material properties 218P (shown in FIG. 2B) of the component C to the FEM simulation model 206 in the first iteration 212F.

Therefore, upon receiving the plurality of process parameters 204 of the manufacturing process and the plurality of initial material properties 205 of the component C, in the first iteration 212F, the FEM simulation model 206 may determine the plurality of initial thermomechanical parameters 215 to initiate the iterative simulation process 200.

Each of the plurality of iterations 212 (shown in FIG. 2B) includes steps 106, 108, 110 of the method 100 shown in FIG. 1.

At step 106, each of the plurality of iterations 212 includes determining, by the FEM simulation model 206, a plurality of thermomechanical parameters 214 of the component C undergoing the manufacturing process based on the plurality of process parameters 204 of the manufacturing process and the plurality of previous predicted material properties 218P of the component C. In some embodiments, the plurality of thermomechanical parameters 214 includes a temperature and a stress of the component C.

In some embodiments, in each iteration 212 except the first iteration 212F, the plurality of previous predicted material properties 218P of the component C is determined by the material model 210 in a previous iteration from the plurality of iterations 212. In some embodiments, the plurality of previous predicted material properties 218P includes at least a predicted flow stress of the component C. The predicted flow stress of the component C may help to predict how the component C may behave and deform during the manufacturing process.

At step 108, each of the plurality of iterations 212 includes determining, by the microstructure model 208, a predicted change 216C in a microstructure 216 of the component C based on the plurality of thermomechanical parameters 214 determined by the FEM simulation model 206.

In some embodiments, in the first iteration 212F, the plurality of initial thermomechanical parameters 215 are provided to the microstructure model 208 as the plurality of thermomechanical parameters 214.

At step 110, each of the plurality of iterations 212 includes determining, by the material model 210, a plurality of current predicted material properties 218C of the component C based on the predicted change 216C in the microstructure 216 of the component C determined by microstructure model 208.

In some embodiments, each iteration 212 further includes providing the plurality of current predicted material properties 218C as the plurality of previous predicted material properties 218P to the FEM simulation model 206 in a next iteration from the plurality of iterations 212.

In some embodiments, the microstructure 216 includes the gamma-prime microstructure γ' (shown in FIG. 4) of the component C. The gamma-prime microstructure γ' of the component C may include precipitates which dissolve dynamically (e.g., over time and dependent on instantaneous thermomechanical parameters 214, such as the temperature and the stress), leading to a rate of softening dependent on a rate they are exposed to the thermomechanical parameters 214. Further, the current predicted material properties 218C (e.g., the plasticity and the flow stress) of the component C may be based on, amongst other things, a dislocation motion which interacts with the precipitates. Therefore, the method 100 may take into account the instantaneous or current predicted change 216C in the gamma-prime microstructure γ'.

In some embodiments, the plurality of iterations 212 is performed for a plurality of time steps. In some embodiments, the method 100 includes terminating the iterative simulation process 200 after a predetermined time duration. The method 100 predicts the changes (i.e., the predicted change 216C) in the microstructure 216 and the material properties (i.e., the current predicted material properties 218C) at each time step and provides the simulated output 220 after the plurality of time steps. Thus, the iterative simulation process 200 may be performed numerous times to provide the simulated output 220 before terminating.

In some embodiments, the simulated output 220 includes at least a plurality of final thermomechanical parameters 214L of the component C determined in the last iteration 212L from the plurality of iterations 212 of the iterative simulation process 200. In some embodiments, the simulated output 220 includes at least a final predicted change 216L in the microstructure 216 of the component C determined in the last iteration 212L from the plurality of iterations 212 of the iterative simulation process 200. In some embodiments, the simulated output 220 includes a plurality of final predicted material properties 218L of the component C determined in the last iteration 212L from the plurality of iterations 212 of the iterative simulation process 200.

At step 112, the method 100 includes determining a quality of the plurality of the process parameters 204 based on the simulated output 220. In some embodiments, the quality of the plurality of process parameters 204 includes at least a good quality or a bad quality. The method 100 may therefore enable a user to predict if a result (e.g., based on the simulated output 220) of the manufacturing process would be suitable or not for applying to the manufacturing process.

Furthermore, in some embodiments, the method 100 includes applying the process parameters 204 to manufacture the component C if the quality of the plurality of process parameters 204 is the good quality. Therefore, the method 100 may provide right first-time process parameters, which may lead to less trial-and-error, scrap avoidance, and shorter development lead-time.

In some embodiments, the FEM simulation model 206 may be implemented in Abaqus solver. In some embodiments, the microstructure model 208 and the material model 210 may be implemented in Fortran subroutines. In some embodiments, the inputs (i.e., the plurality of process parameters 204 of the manufacturing process and the plurality of initial material properties 205 of the component C) may be provided using Python job-handling scripts. Further, the simulated output 220 may also be post-processed using the Python job-handling scripts.

In some embodiments, the FEM simulation model 206 may use the initial/previously predicted flow stresses, and the process parameters, such as applied external loads, surface friction, and the flywheel energy to calculate displacement of each finite element (FE).

In some embodiments, the microstructure model 208 updates the microstructure 216 to the predicted change 216C in the microstructure 216 depending upon the thermomechanical parameters 214 (e.g., local thermal conditions).

In some embodiments, the material model 210 calculates a plastic strain rate from local microstructure state and the resultant stress (e.g., the flow stress) is determined.

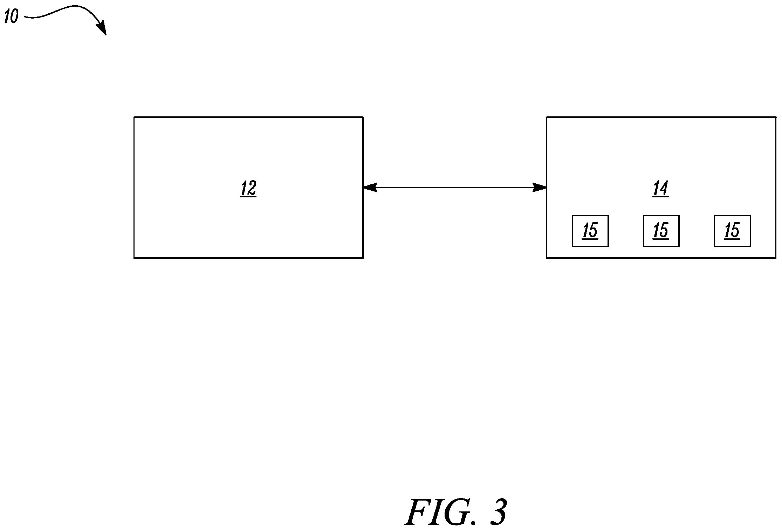

**FIG. 3** shows a schematic block diagram of a computing device 10, according to an embodiment of the present disclosure.

The computing device 10 includes a processor 12 and a memory 14. The processor 12 and the memory 14 are communicably coupled to each other. The memory 14 has stored therein a plurality of instructions 15 that when executed by the processor 12 causes the computing device 10 to perform the method 100 shown in FIG. 1. In some embodiments, a non-transitory computer-readable storage medium (e.g., the memory 14) includes the instructions 15 that, when executed, cause at least one processor (e.g., the processor 12) to perform the method 100 shown in FIG. 1.

In some embodiments, the computing device 10 may further includes a user interface (not shown) communicably coupled to the processor 12. In some embodiments, the user interface is a graphical user interface. In some examples, the user interface may include a keyboard, a mouse, a display, and the like. The user may interact with the user interface to enter the inputs information (i.e., the plurality of process parameters 204 of the manufacturing process and the plurality of initial material properties 205 of the component C) or to obtain an output information (e.g., the simulated output 220).

**FIG. 4** shows the simulated output 220 of the iterative simulation process 200 shown in FIGS. 2A, 2B and FIG. 2C, according to an embodiment of the present disclosure.

In the illustrated example of FIG. 4, the simulated output 220 includes the plurality of final thermomechanical parameters 214L which may be a process model including a final temperature T and/ or a final stress (not shown), the final predicted change 216L in the microstructure 216 of the component C which may be a gamma prime microstructure evolution, and the plurality of final predicted material properties 218L of the component C which may be a final flow stress FS.

As illustrated in the embodiment of FIG. 4, the simulated output 220 may be graphically represented by the user interface of the computing device 10 shown in FIG. 3. In some embodiments, the user may interact with the simulated output 220.

In some embodiments, the simulated output 220 includes the plurality of final thermomechanical parameters 214L for different locations of the component C. The different locations may have different thermomechanical parameters 214, for example, different final temperatures T. Specifically, locations A and B may have different final temperatures T. In the illustrated embodiment of FIG. 4, the plurality of final thermomechanical parameters 214L for different locations of the component C is graphically represented.

Since the microstructure 216 of the component C is dependent upon the thermomechanical parameters 214, different locations of the component C may have different microstructures.

In some embodiments, the simulated output 220 includes the final predicted change 216L in the microstructure 216 for different locations (e.g., for the locations A and B) of the component C. For example, the location A on the component C may have a final predicted microstructure MA and the location B on the component C may have a final predicted microstructure MB.

Further, since the material properties (e.g., the current predicted material properties 218C) of the component C is dependent upon the predicted change (e.g., the predicted change 216C) in the microstructure 216, different locations e.g., for the locations A and B) of the component C may have different material properties.

In some embodiments, the simulated output 220 includes the final predicted material properties 218L for different locations of the component C. For example, the location A on the component C may have material properties depicted by a curve MPA and the location B on the component C may have material properties depicted by a curve MPB.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method (100) for optimizing a manufacturing process, the method comprising the steps of:
arranging a finite element method (FEM) simulation model (206), a microstructure model (208), and a material model (210) in a closed loop; and
performing an iterative simulation process (200) to determine a simulated output (220) of the manufacturing process, the iterative simulation process (200) comprising performing a plurality of iterations (212), the plurality of iterations (212) comprising a first iteration (212F) and a last iteration (212L), each of the plurality of iterations (212) comprising the steps of:
determining, by the FEM simulation model (206), a plurality of thermomechanical parameters (214) of a component (C) undergoing the manufacturing process based on a plurality of process parameters (204) of the manufacturing process and a plurality of previous predicted material properties (218P) of the component (C);
determining, by the microstructure model (208), a predicted change in a microstructure (216) of the component (C) based on the plurality of thermomechanical parameters (214) determined by the FEM simulation model (206); and
determining, by the material model (210), a plurality of current predicted material properties (218C) of the component (C) based on the predicted change in the microstructure (216) of the component (C) determined by the microstructure model (208); and
determining a quality of the plurality of the process parameters (204) based on the simulated output (220).

2. The method (100) of claim 1, wherein the simulated output (220) comprises at least a plurality of final thermomechanical parameters (214L) of the component (C) determined in the last iteration (212L) from the plurality of iterations (212) of the iterative simulation process (200).

3. The method (100) of claim 1 or 2, wherein, in each iteration (212) except the first iteration (212F), the plurality of previous predicted material properties (218P) of the component (C) is determined by the material model (210) in a previous iteration from the plurality of iterations (212).

4. The method (100) of any preceding claim, wherein each iteration (212) further comprises providing the plurality of current predicted material properties (218C) as the plurality of previous predicted material properties (218P) to the FEM simulation model (206) in a next iteration from the plurality of iterations (212).

5. The method (100) of any preceding claim, wherein the plurality of previous predicted material properties (218P) comprises at least a predicted flow stress of the component (C).

6. The method (100) of any preceding claim, wherein the plurality of thermomechanical parameters (214) comprises a temperature and a stress of the component (C).

7. The method (100) of any preceding claim, wherein the microstructure (216) comprises a gamma-prime microstructure (γ') of the component (C).

8. The method (100) of any preceding claim, wherein the component (C) includes at least one of a nickel alloy, an aluminium alloy, and a titanium alloy.

9. The method (100) of any preceding claim, wherein the manufacturing process is at least one of a welding process, a forging process, and a cutting process.

10. The method (100) of claim 9, wherein the welding process is an inertia friction welding process.

11. The method (100) of claim 10, wherein the plurality of process parameters (204) comprises at least one of a flywheel energy, a flywheel rotational speed, and a forging pressure.

12. The method (100) of any preceding claim, further comprising, prior to performing the iterative simulation process (200):
receiving the plurality of process parameters (204) and a plurality of initial material properties (205) of the component (C); and
determining, by the FEM simulation model (206), a plurality of initial thermomechanical parameters (215) to initiate the iterative simulation process (200).

13. The method (100) of claim 12, wherein the plurality of initial material properties (205) is provided as the plurality of previous predicted material properties (218P) of the component (C) to the FEM simulation model (206) in the first iteration (212F).

14. A computing device (10) comprising a processor (12) and a memory (14) having stored therein a plurality of instructions (15) that when executed by the processor (12) causes the computing device (10) to perform the method (100) of any one of claims 1 to 13.

15. A non-transitory computer-readable storage medium comprising instructions (15) that, when executed, cause at least one processor (12) to perform the method (100) of any one of claims 1 to 13.
